# EUROPEAN PATENT APPLICATION

(11) **EP 3 843 342 A1**
(43) Date of publication of application: **30.06.2021**
(21) Application number: 19865131.7
(22) Date of filing: 30.08.2019
(51) Int. Cl.: H04L 12/803

(54) **COMMUNICATION METHOD AND RELATED DEVICE**

(30) Priority: 26.09.2018 CN 201811121019
(71) Applicant: HUAWEI TECHNOLOGIES CO., LTD., Shenzhen, Guangdong 518129 (CN)
(72) Inventor: YANG, Qingchang, Shenzhen, Guangdong 518129 (CN); YU, Qinghua, Shenzhen, Guangdong 518129 (CN)
(74) Representative: Pfenning, Meinig & Partner mbB
(86) International application number: PCT/CN2019/103490
(87) International publication number: WO 2020/063251

(57) **Abstract**

Embodiments of this application disclose a communication method and a related device. The method is applied to a public cloud system. The system includes a global service controller GSC and at least one service processing node. Each service processing node includes a node controller vCTRL and a virtual service processing unit vSPU. The GSC receives a vSPU list sent by a vCTRL of a first service processing node in the at least one service processing node, where the vSPU list includes address information of a vSPU of the first service processing node. The GSC sends the address information to a vCTRL of a second service processing node in the at least one service processing node, where the address information is used to indicate a vSPU of the second service processing node to select the vSPU of the first service processing node for communication. The embodiments of this application may be used to implement unlimited scale-out and improve processing performance of the entire system.

## Description

This application claims priority to Chinese Patent Application No. 201811121019.6, filed with China National Intellectual Property Administration on September 26, 2018 and entitled "COMMUNICATION METHOD AND RELATED DEVICE", which is incorporated herein by reference in its entirety.

### TECHNICAL FIELD

This application relates to the field of wireless network technologies, and in particular, to a communication method and a related device.

### BACKGROUND

A public cloud system resource (such as a server or storage space) is owned and operated by a third-party cloud service provider, and is provided over the internet (Internet). A core attribute of the resource is a resource sharing service. Because of shareability of the resource, a tenant is not allowed to exclusively use one physical host. Even if the tenant may exclusively use the physical host, costs are relatively high. Therefore, performance of a single virtual machine is not very high, there is an upper limit to processing performance of an entire system, and unlimited scale-out cannot be performed.

### SUMMARY

Embodiments of this application provide a communication method and a related device, to implement unlimited scale-out and improve processing performance of an entire system.

According to a first aspect, an embodiment of this application provides a communication method. The method includes:

A GSC receives a vSPU list sent by a vCTRL of a first service processing node in at least one service processing node, where the vSPU list includes address information of a vSPU of the first service processing node. Then, the address information is sent to a vCTRL of a second service processing node in the at least one service processing node. After receiving the address information of the vSPU of the first service processing node, a vSPU of the second service processing node selects the vSPU of the first service processing node for communication. Direct communication between service processing nodes is implemented without being limited by performance of the GSC and the vCTRL. This can implement unlimited scale-out and improve processing performance of an entire system.

In a possible design, the GSC may monitor a running status of each service processing node. When a running status of a service processing node is abnormal, the GSC may send a notification message to a vCTRL of another service processing node. After receiving the notification message, the vCTRL of the another service processing node synchronizes the notification message to a vSPU. Then, the vSPU may determine that the running status of the service processing node is abnormal, and does not select a vSPU of the service processing node for communication, to avoid selecting an abnormal vSPU. This ensures successful communication.

In another possible design, the vCTRL of the first service processing node may obtain load of each vSPU of the first service processing node, and then report the load of each vSPU of the first service processing node to the GSC. The GSC delivers the load of each vSPU of the first service processing node to each vSPU of the second service processing node. The vSPU of the second service processing node may select the vSPU of the first service processing node for communication based on the load of each vSPU of the first service processing node and the vSPU list, to ensure service load balancing.

According to a second aspect, an embodiment of this application provides a communication method. The method includes: A vCTRL of a first service processing node obtains a vSPU list of the first service processing node. Then, the vSPU list is sent to a GSC, where the vSPU list includes address information of a vSPU of the first service processing node. The GSC synchronizes the address information of the vSPU of the first service processing node to a second service processing node, where a vSPU of the second service processing node selects the vSPU of the first service processing node for communication. Direct communication between service processing nodes is implemented without being limited by performance of the GSC and the vCTRL. This can implement unlimited scale-out and improve processing performance of an entire system.

In a possible design, the vCTRL of the first service processing node may obtain load of the vSPU of the first service processing node. When load of one or more vSPUs of the first service processing node is greater than a first preset threshold, the vCTRL of the first service processing node may increase a quantity of the vSPUs of the first service processing node, to implement elastic scale-out based on a service situation.

In another possible design, the vCTRL of the first service processing node may obtain the load of the vSPU of the first service processing node. When the load of the one or more vSPUs of the first service processing node is less than a second preset threshold, the vCTRL of the first service processing node may decrease the quantity of the vSPUs of the first service processing node, to implement elastic scale-in based on the service situation.

In another possible design, the vCTRL of the first service processing node may report a vSPU list obtained after scale-out or scale-in to the GSC, so that the GSC synchronizes the vSPU list obtained after scale-out or scale-in to another service processing node. In this way, the another service processing node may select a vSPU for communication based on the vSPU list obtained after scale-out or scale-in.

In another possible design, the vCTRL of the first service processing node may obtain a running status of the vSPU of the first service processing node. When the running status of the vSPU of the first service processing node is abnormal (for example, a fault occurs or the vSPU goes offline), the vCTRL of the first service processing node may update the vSPU list, and send an updated vSPU list to the GSC, so that the GSC synchronizes the updated vSPU list to each of other service processing nodes. In this way, each of other service processing nodes selects the vSPU of the first service processing node for communication based on the updated vSPU list.

It should be understood that, the foregoing only indicates that the vCTRL of the first service processing node has the foregoing functions, and any service processing node in the system has the foregoing functions.

According to a third aspect, an embodiment of this application provides a communication method. The method includes: A GSC receives a vSPU list sent by a vCTRL of each of at least one service processing node, where the vSPU list includes first address information of a vSPU of each service processing node. Then, the GSC selects a target vSPU from a vSPU of the at least one service processing node. Finally, first address information of the target vSPU is sent to a user device, where the first address information is used to indicate the user device to communicate with the target vSPU. In this way, the user device directly communicates with a target device based on address information without being limited by performance of the GSC and the vCTRL. This can implement unlimited scale-out and improve processing performance of an entire system.

In a possible design, the GSC may receive load, of each vSPU of each service processing node, sent by the vCTRL of each of the at least one service processing node. Then, the target vSPU is selected from a vSPU of one or more service processing nodes based on the load of each vSPU of each service processing node, to ensure load balancing of each service processing node.

In another possible design, the GSC may select a vSPU with minimum load as the target vSPU from the vSPU of the one or more service processing nodes, to ensure the load balancing of each service processing node.

In another possible design, the GSC may monitor a running status or running statuses of the one or more service processing nodes. If it is obtained, through monitoring, that a running status of a service processing node is abnormal, a vSPU list of the service processing node may be deleted, and the target vSPU is selected from a vSPU of another service processing node, to avoid selecting an abnormal vSPU. This ensures successful communication.

In another possible design, the GSC may obtain an area location of the user device and at least one type of operator information. Then, the GSC selects a target service processing node from the one or more service processing nodes based on the area location and the at least one type of operator information. The target service processing node is a service processing node that belongs to a same operator as the user device, or a service processing node that provides optimal service quality for the user device. Finally, the GSC sends second address information of a vCTRL of the target service processing node to the user device. After receiving the second address information of the vCTRL of the target service processing node, the user device may send a service request to the vCTRL of the target service processing node.

According to a fourth aspect, an embodiment of this application provides a communication method. The method includes: A vCTRL of a service processing node obtains a vSPU list of a vSPU of the service processing node. Then, the vSPU list is sent to a GSC, where the vSPU list includes first address information of the vSPU of the service processing node, and the first address information is used by the GSC to indicate a user device to select the vSPU of the service processing node for communication. In this way, the user device directly communicates with a target device based on address information without being limited by performance of the GSC and the vCTRL. This can implement unlimited scale-out and improve processing performance of an entire system.

In a possible design, a vCTRL of each service processing node may check load of each vSPU of the service processing node based on a preset period, and report the load of each vSPU to the GSC, so that the GSC selects a vSPU for communication based on the load of each vSPU, to ensure load balancing.

In a possible design, the vCTRL of each service processing node may obtain load of the vSPU of the service processing node. When load of one or more vSPUs of a service processing node is greater than a first preset threshold, a vCTRL of the service processing node may increase a quantity of the vSPUs of the service processing node, to implement elastic scale-out based on a service situation.

In another possible design, the vCTRL of each service processing node may obtain the load of the vSPU of the service processing node. When load of one or more vSPUs of a service processing node is less than a second preset threshold, a vCTRL of the service processing node may decrease a quantity of the vSPUs of the service processing node, to implement elastic scale-in based on the service situation.

In another possible design, the vCTRL of each service processing node may report a vSPU list obtained after scale-out or scale-in to the GSC, so that the GSC synchronizes the vSPU list obtained after scale-out or scale-in to another service processing node. In this way, the another service processing node may select a vSPU for communication based on the vSPU list obtained after scale-out or scale-in.

In another possible design, the vCTRL of each service processing node may obtain a running status of the vSPU of each service processing node. When a running status of a vSPU of a service processing node is abnormal (for example, a fault occurs or the vSPU goes offline), a vCTRL of the service processing node may update the vSPU list, and send an updated vSPU list to the GSC, so that the GSC selects a target vSPU based on the updated vSPU list, to implement communication between the user device and the target vSPU.

According to a fifth aspect, an embodiment of this application provides a GSC. The GSC is configured to implement the methods and the functions performed by the GSC in the first aspect and the GSC in the third aspect, and is implemented by hardware/software. The hardware/software includes modules corresponding to the foregoing functions.

According to a sixth aspect, an embodiment of this application provides a vCTRL. The vCTRL is configured to implement the methods and the functions performed by the vCTRL in the second aspect and the vCTRL in the fourth aspect, and is implemented by hardware/software. The hardware/software includes modules corresponding to the foregoing functions.

According to a seventh aspect, an embodiment of this application provides another GSC, including a processor and a memory. The processor executes a program stored in the memory, to implement the steps of the communication methods provided in the first aspect and the third aspect.

In a possible design, the GSC provided in this embodiment of this application further includes a communications bus, and the communications bus is used to implement connection and communication between the processor and the memory.

In another possible design, the GSC provided in this embodiment of this application may include a corresponding module configured to perform behavior of the GSC in the foregoing method design. The module may be software and/or hardware.

According to an eighth aspect, an embodiment of this application provides another vCTRL, including a processor and a memory. The processor executes a program stored in the memory, to implement the steps of the communication methods provided in the second aspect and the fourth aspect.

In a possible design, the vCTRL provided in this embodiment of this application further includes a communications bus, and the communications bus is used to implement connection and communication between the processor and the memory.

In another possible design, the vCTRL provided in this embodiment of this application may include a corresponding module configured to perform behavior of the vCTRL in the foregoing method design. The module may be software and/or hardware.

According to a ninth aspect, this application provides a computer-readable storage medium. The computer-readable storage medium stores an instruction, and when the instruction is run on a computer, the computer is enabled to perform the methods in the foregoing aspects.

According to a tenth aspect, this application provides a computer program product including an instruction. When the computer program product runs on a computer, the computer is enabled to perform the methods in the foregoing aspects.

### BRIEF DESCRIPTION OF DRAWINGS

To describe the technical solutions in the embodiments of this application or in the background more clearly, the following briefly describes the accompanying drawings for describing the embodiments of this application or the background.
FIG. 1 is a schematic architectural diagram of a public cloud system according to an embodiment of this application;
FIG. 2 is a schematic architectural diagram of a public cloud system based on server load balancing according to an embodiment of this application;
FIG. 3 is a schematic architectural diagram of a public cloud system based on client load balancing according to an embodiment of this application;
FIG. 4(A) is a schematic architectural diagram of a public cloud system according to an embodiment of this application;
FIG. 4(B) is a schematic architectural diagram of another public cloud system according to this application;
FIG. 5 is a schematic flowchart of a communication method according to an embodiment of this application;
FIG. 6 is a schematic flowchart of a communication method according to an embodiment of this application;
FIG. 7 is a schematic structural diagram of a global service controller GSC according to an embodiment of this application;
FIG. 8 is a schematic structural diagram of a node controller vCTRL according to an embodiment of this application;
FIG. 9 is a schematic structural diagram of another global service controller GSC according to this application; and
FIG. 10 is a schematic structural diagram of another node controller vCTRL according to an embodiment of this application.

### DESCRIPTION OF EMBODIMENTS

The following describes the embodiments of this application with reference to the accompanying drawings in the embodiments of this application.

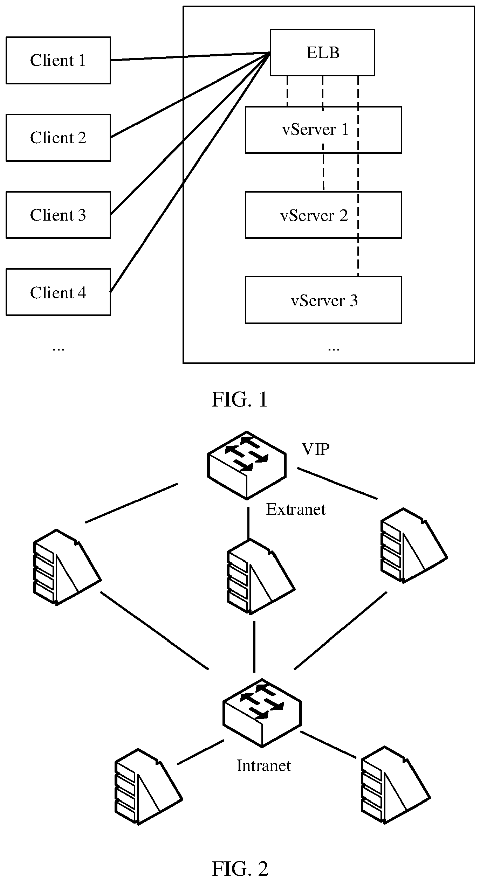

FIG. 1 is a schematic architectural diagram of a public cloud system according to an embodiment of this application. The system uses elastic load balancing (Elastic Load Balancing, ELB) to improve overall system performance. The system includes a plurality of clients, a plurality of backend servers (vServer), and one ELB. The ELB presents a fixed address externally. Each client uses the address to connect to the ELB. The client may send a packet to the ELB. After receiving the packet, the ELB initiates a connection to the backend server and sends the packet to the backend server according to a specific policy. All packets pass through the ELB. In addition, the ELB may check a running status of each backend server based on a preset period. When the backend server is unavailable, the ELB may forward the packet to another backend server. When the backend server cannot bear a service because of insufficient performance, a new backend server is automatically added to bear the service. However, processing performance of the system is limited by performance of the ELB. As a result, there is an upper limit to the performance, and unlimited scale-out cannot be performed.

FIG. 2 is a schematic architectural diagram of a public cloud system based on server load balancing according to an embodiment of this application. As shown in the figure, a Linux virtual server (Linux virtual server, LVS) cluster presents a unified virtual address (virtual internet protocol, VIP) externally. A client communicates only with the VIP, and is unaware of a server that actually provides a business service. An open shortest path first (open shortest path first, OSPF) protocol runs between the LVS cluster and a switch. An equal-cost multi-path routing (equal-cost multi-path routing, ECMP) for the VIP is generated on the switch. If performance of the LVS is insufficient, the LVS is scaled out, and then a new equal-cost route is added on the switch. However, a quantity of paths of the equal-cost route in the system is limited. When the quantity of paths of the equal-cost route reaches an upper limit, scale-out cannot be performed. In addition, performance of the entire system is limited by maximum performance of a unified entry point. If the unified entry point is faulty, the entire system may break down.

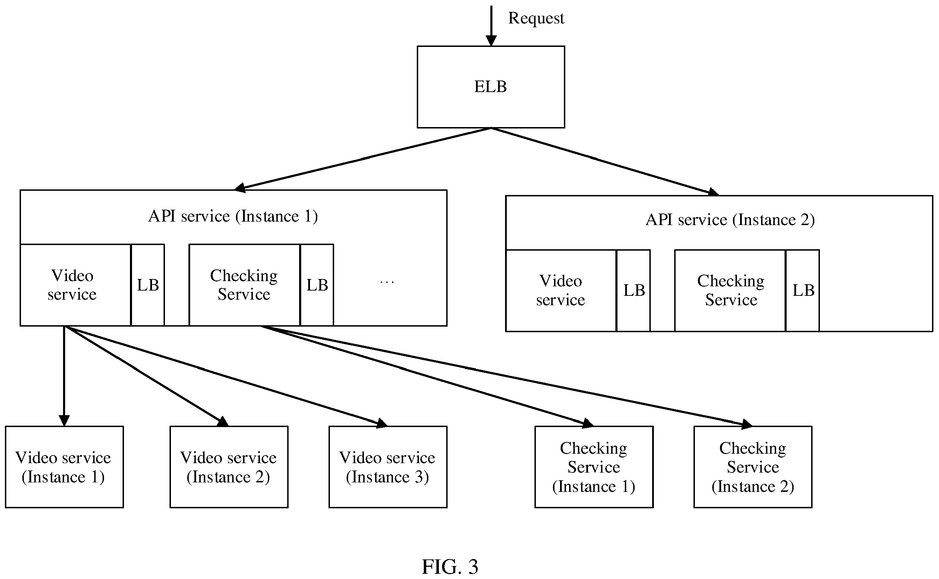

Correspondingly, the system performance may alternatively be improved through client load balancing. A domain name system (domain name system, DNS) application is used as an example. In a possible implementation, after a client initiates a request, a DNS server returns an address list to the client. The address list includes an address of a server that processes a service. After receiving the address list, the client randomly selects an address from the address list to send the request. In another possible implementation, a server that provides a service registers with a service center. The service center records an address of the registered server in the address list. When the client requests the service from the service center, the service center returns the address list to the client. After receiving the address list, the client randomly selects a server from the address list to implement the service. FIG. 3 is a schematic architectural diagram of a public cloud system based on client load balancing according to an embodiment of this application. After receiving an external request, an ELB distributes the request to a load balancer (Load Balancer, LB) layer. The LB layer selects a server from a server list delivered by the service center to implement the service. In this process, the LB layer is considered as a client selection server, to improve overall performance through the client load balancing. However, the system performance is limited by performance of the ELB in a local domain, and unlimited scale-out cannot be performed.

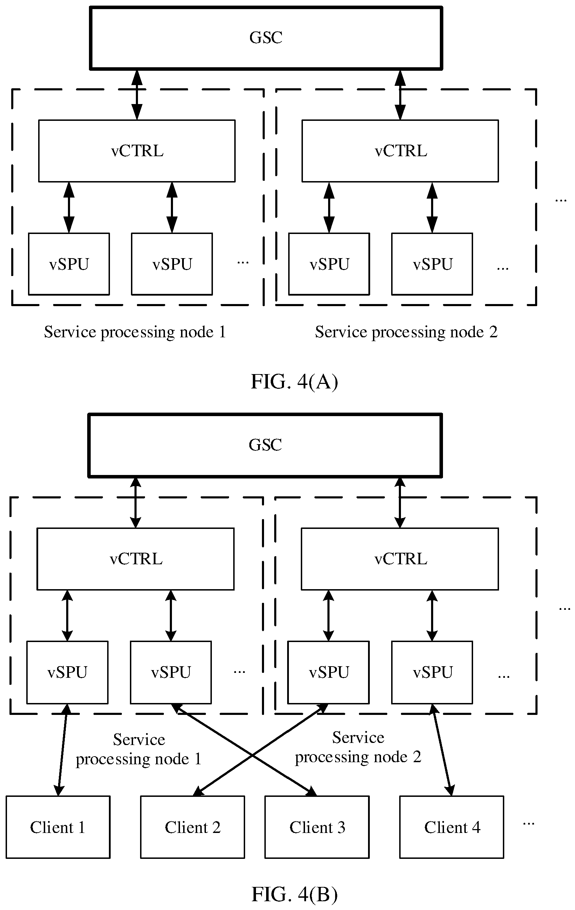

In conclusion, there is an upper limit to processing performance of each of the three foregoing systems, and unlimited scale-out cannot be performed. To resolve the foregoing technical problem, an embodiment of this application provides systems shown in FIG. 4(A) and FIG. 4(B). FIG. 4(A) is a schematic architectural diagram of a public cloud system according to an embodiment of this application. The system includes one global service controller (global service controller, GSC) and one or more service processing nodes. Each service processing node includes one node controller (virtual controller, vCTRL) and one or more virtual service processing units (virtual service process unit, vSPU). The vSPU may be a virtual server (virtual Server, vServer). In the system shown in FIG. 4(A), inter-node communication, for example, routing and forwarding, may be performed between vSPUs of each service processing node. FIG. 4(B) is a schematic architectural diagram of another public cloud system according to this application. The system is deployed globally across regions in a distributed manner, and includes one GSC and one or more service processing nodes. Each service processing node includes one vCTRL and one or more vSPUs, and may further include one or more clients. In the system shown in FIG. 4(B), the client may select to communicate with any vSPU of each service processing node. Based on the foregoing systems, the embodiments of this application provide the following solutions.

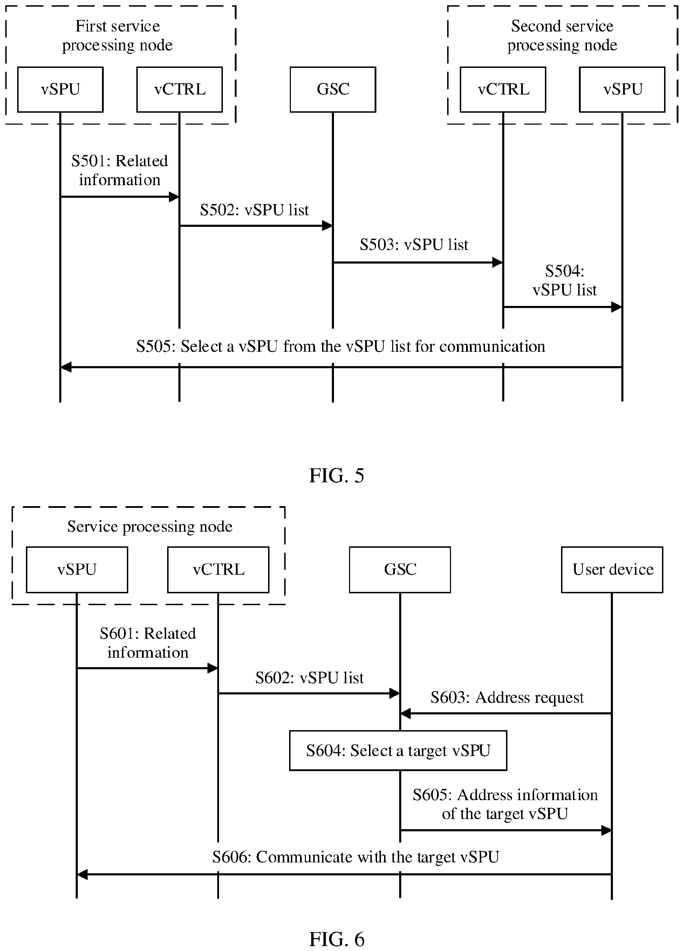

FIG. 5 is a schematic flowchart of a communication method according to an embodiment of this application. The method includes but is not limited to the following steps.

S501: After going online, a vSPU of a first service processing node sends related information of the vSPU to a vCTRL of the first service processing node for registration, where the related information may include address information, resource information, a bearer capability, and the like of the vSPU of the first service processing node.

S502: After receiving related information of each vSPU of the first service processing node, the vCTRL of the first service processing node generates a vSPU list, and then sends the vSPU list to a GSC, where the vSPU list may include address information of each vSPU of the first service processing node, and may further include resource information, a bearer capability, and the like.

S503: After receiving the vSPU list of the first service processing node, the GSC sends a synchronization message to each of other service processing nodes (for example, a second service processing node), where the synchronization message includes the vSPU list of the first service processing node.

S504: After receiving the vSPU list of the first service processing node, the second service processing node sends the vSPU list of the first service processing node to each vSPU of the second service processing node.

S505: After receiving the vSPU list of the first service processing node, the vSPU of the second service processing node selects the address information from the vSPU list, and communicates with the vSPU of the first service processing node based on the address information.

During specific implementation, the vCTRL of the first service processing node may obtain load of each vSPU of the first service processing node, and then report the load of each vSPU of the first service processing node to the GSC. The GSC may deliver the load of each vSPU of the first service processing node to each vSPU of the second service processing node. The vSPU of the second service processing node may select, based on the load of each vSPU of the first service processing node and the vSPU list, the vSPU of the first service processing node for communication. For example, a vSPU, with minimum load, of the first service processing node may be selected for communication. The load may include CPU usage, memory usage, bandwidth usage, or the like.

Optionally, the GSC may monitor a running status of each service processing node. When a running status of a service processing node is abnormal, the GSC may send a notification message to a vCTRL of another service processing node. After receiving the notification message, the vCTRL of the another service processing node synchronizes the notification message to a vSPU. Then, the vSPU may determine that the running status of the service processing node is abnormal, and does not select a vSPU of the service processing node for communication, to avoid selecting an abnormal vSPU. This ensures successful communication.

Optionally, a vCTRL of each service processing node may obtain load of a vSPU of each service processing node. When load of one or more vSPUs of a service processing node is greater than a first preset threshold, a vCTRL of the service processing node may increase a quantity of the vSPUs of the service processing node, to implement elastic scale-out based on a service situation.

Optionally, the vCTRL of each service processing node may obtain the load of the vSPU of each service processing node. When load of one or more vSPUs of a service processing node is less than a second preset threshold, a vCTRL of the service processing node may decrease a quantity of the vSPUs of the service processing node, to implement elastic scale-in based on the service situation.

The vCTRL of each service processing node may report a vSPU list obtained after scale-out or scale-in to the GSC, so that the GSC synchronizes the vSPU list obtained after scale-out or scale-in to another service processing node. In this way, the another service processing node may select a vSPU for communication based on the vSPU list obtained after scale-out or scale-in.

Optionally, the vCTRL of each service processing node may obtain a running status of the vSPU of each service processing node. When a running status of a vSPU of a service processing node is abnormal (for example, a fault occurs or the vSPU goes offline), a vCTRL of the service processing node may update the vSPU list, and send an updated vSPU list to the GSC, so that the GSC synchronizes the updated vSPU list to each of other service processing nodes. In this way, each of other service processing nodes selects the vSPU of the service processing node for communication based on the updated vSPU list.

In this embodiment of this application, the vCTRL of each service processing node sends a vSPU list of each service processing node to the GSC, and the GSC sends the vSPU list to a vCTRL of another service processing node. Then, the vCTRL synchronizes the vSPU list to each vSPU of the another service processing node. In this way, a vSPU of one service processing node may select, based on the vSPU list, a vSPU of another service processing node for communication, to implement direct communication between service processing nodes without being limited by performance of the GSC and the vCTRL. This can implement unlimited scale-out and improve processing performance of an entire system.

FIG. 6 is a schematic flowchart of a communication method according to an embodiment of this application. The method includes but is not limited to the following steps.

S601: After going online, a vSPU of each service processing node sends related information of the vSPU to a vCTRL of the service processing node for registration, where the related information may include address information, resource information, a bearer capability, and the like of the vSPU of the service processing node.

S602: After receiving related information of each vSPU of each service processing node, a vCTRL of each service processing node generates a vSPU list, and then sends the vSPU list to a GSC, where the vSPU list may include first address information of each vSPU of the service processing node, and may further include resource information, a bearer capability, and the like.

Optionally, the vCTRL of each service processing node may check load of each vSPU of each service processing node based on a preset period, and report the load of each vSPU to the GSC. The load may include CPU usage, memory usage, bandwidth usage, or the like.

S603: Before requesting a business service from the vSPU of the service processing node, a user device may first send an address request to the GSC.

S604: After receiving the address request, the GSC selects a target vSPU from a vSPU of one or more service processing nodes.

During specific implementation, the GSC may receive the load, of each vSPU of each service processing node, reported by the vCTRL of each service processing node. Then, the GSC selects the target vSPU from the vSPU of the one or more service processing nodes based on the load of each vSPU of each service processing node. Further, a vSPU with minimum load may be selected as the target vSPU from the vSPU of the one or more service processing nodes.

S605: The GSC sends first address information of the target vSPU to the user device.

S606: After receiving the first address information of the target vSPU, the user device communicates with the target vSPU based on the first address information.

For the solution in S604 to S606, this embodiment of this application provides another optional solution, including: The GSC may obtain an area location of the user device and at least one type of operator information. Then, the GSC selects a target service processing node from the one or more service processing nodes based on the area location and the at least one type of operator information. The target service processing node is a service processing node that belongs to a same operator as the user device, or a service processing node that provides optimal service quality for the user device. Finally, the GSC sends second address information of a vCTRL of the target service processing node to the user device. After receiving the second address information of the vCTRL of the target service processing node, the user device may send a service request to the vCTRL of the target service processing node. After receiving the service request, the target service processing node may return a vSPU list of the target service processing node to the user device, or may return address information of the vSPU with minimum load. If receiving the vSPU list of the target service processing node, the user device may select a vSPU of the target service processing node for communication based on the vSPU list. If receiving the address information of the vSPU with minimum load, the user device may communicate with the vSPU with minimum load based on the address information.

Optionally, the GSC may monitor a running status or running statuses of the one or more service processing nodes. If it is obtained, through monitoring, that a running status of a service processing node is abnormal, a vSPU list of the service processing node may be deleted, and the target vSPU is selected from a vSPU of another service processing node.

Optionally, the vCTRL of each service processing node may obtain load of a vSPU of each service processing node. When load of one or more vSPUs of a service processing node is greater than a first preset threshold, a vCTRL of the service processing node may increase a quantity of the vSPUs of the service processing node, to implement elastic scale-out based on a service situation.

Optionally, the vCTRL of each service processing node may obtain the load of the vSPU of each service processing node. When load of one or more vSPUs of a service processing node is less than a second preset threshold, a vCTRL of the service processing node may decrease a quantity of the vSPUs of the service processing node, to implement elastic scale-in based on the service situation.

The vCTRL of each service processing node may report a vSPU list obtained after scale-out or scale-in to the GSC, so that the GSC synchronizes the vSPU list obtained after scale-out or scale-in to another service processing node. In this way, the another service processing node may select a vSPU for communication based on the vSPU list obtained after scale-out or scale-in.

Optionally, the vCTRL of each service processing node may obtain a running status of the vSPU of each service processing node. When a running status of a vSPU of a service processing node is abnormal (for example, a fault occurs or the vSPU goes offline), a vCTRL of the service processing node may update the vSPU list, and send an updated vSPU list to the GSC, so that the GSC selects the target vSPU based on the updated vSPU list, to implement communication between the user device and the target vSPU.

In this embodiment of this application, service processing nodes do not communicate with each other, and the service processing node processes the service request from the user device. First, the GSC obtains a vSPU list of each service processing node, selects the target vSPU after receiving the address request sent by the user device, and returns address information of the target vSPU to the user device. In this way, the user device directly communicates with a target device based on the address information of the target vSPU without being limited by performance of the GSC and the vCTRL. This can implement unlimited scale-out and improve processing performance of an entire system.

The foregoing describes in detail the method in the embodiments of this application. The following provides apparatuses in the embodiments of this application.

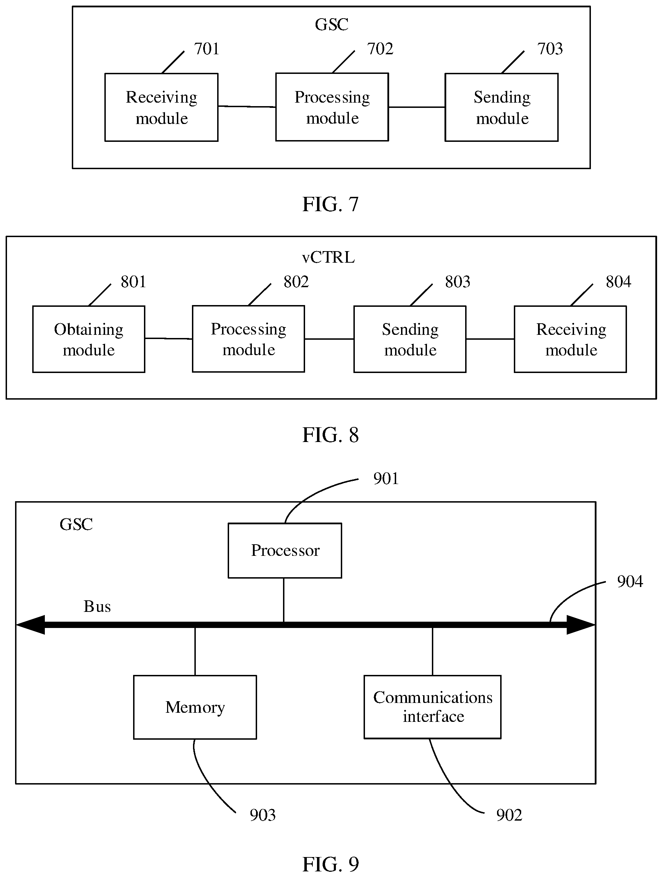

FIG. 7 is a schematic structural diagram of a global service controller GSC according to an embodiment of this application. The GSC may include a receiving module 701, a processing module 702, and a sending module 703. Detailed descriptions of each module are as follows:

The receiving module 701 is configured to receive a vSPU list sent by a vCTRL of a first service processing node in at least one service processing node. The vSPU list includes address information of a vSPU of the first service processing node.

The sending module 703 is configured to send the address information to a vCTRL of a second service processing node in the at least one service processing node. The address information is used to indicate a vSPU of the second service processing node to select the vSPU of the first service processing node for communication.

Optionally, the processing module 702 is configured to monitor a running status of each service processing node.

The sending module 703 is further configured to: when a running status of the first service processing node is abnormal, send a notification message to the vCTRL of the second service processing node. The notification message is used to indicate the vSPU of the second service processing node not to select the vSPU of the first service processing node for communication.

In another embodiment, the receiving module 701 is configured to receive a vSPU list sent by a vCTRL of each service processing node in the at least one service processing node. The vSPU list includes first address information of a vSPU of each service processing node. The processing module 702 is configured to select a target vSPU from a vSPU of the at least one service processing node.

The sending module 703 is configured to send first address information of the target vSPU to a user device. The first address information is used to indicate the user device to communicate with the target vSPU.

Optionally, the processing module 702 is further configured to: monitor a running status of the at least one service processing node, delete a vSPU list from a service processing node whose running status is abnormal in the at least one service processing node, and select the target vSPU from a vSPU of another service processing node in the at least one service processing node.

Optionally, the receiving module 701 is further configured to receive load, of each vSPU of each service processing node, sent by the vCTRL of each service processing node in the at least one service processing node. The processing module 702 is further configured to select the target vSPU from the vSPU of the at least one service processing node based on the load of each vSPU of the at least one service processing node.

Optionally, the processing module 702 is further configured to select a vSPU with minimum load as the target vSPU from the vSPU of the at least one service processing node.

Optionally, the processing module 702 is further configured to obtain an area location of the user device and at least one type of operator information, and select a target service processing node from the at least one service processing node based on the area location and the at least one type of operator information. The target service processing node is a service processing node that belongs to a same operator as the user device, or a service processing node that provides optimal service quality for the user device.

The sending module 703 is further configured to send second address information of a vCTRL of the target service processing node to the user device. The second address information is used to indicate the user device to request a vSPU from the vCTRL of the target service processing node for communication.

It should be noted that, for implementation of each module, refer to corresponding descriptions of the method embodiment shown in FIG. 5 or FIG. 6. The module performs the method and the functions performed by the

GSC in the foregoing embodiments.

FIG. 8 is a schematic structural diagram of a node controller vCTRL according to an embodiment of this application. The vCTRL may include an obtaining module 801, a processing module 802, a sending module 803, and a receiving module 804. Detailed descriptions of each module are as follows:

The obtaining module 801 is configured to obtain a vSPU list of a first service processing node.

The sending module 803 is configured to send the vSPU list to a GSC. The vSPU list includes address information of a vSPU of the first service processing node, and the address information is used by the GSC to indicate a vSPU of a second service processing node to select the vSPU of the first service processing node for communication.

Optionally, the obtaining module 801 is further configured to obtain load of the vSPU of the first service processing node; and
the processing module 802 is configured to: when the load of the vSPU of the first service processing node is greater than a first preset threshold, increase a quantity of vSPUs of the first service processing node.

Optionally, the obtaining module 801 is further configured to obtain the load of the vSPU of the first service processing node; and
the processing module 802 is configured to: when the load of the vSPU of the first service processing node is less than a second preset threshold, decrease the quantity of vSPUs of the first service processing node.

Optionally, the obtaining module 801 is further configured to obtain a running status of the vSPU of the first service processing node. The processing module 802 is further configured to update the vSPU list when the running status of the vSPU of the first service processing node is abnormal.

In another embodiment, the obtaining module 801 is configured to obtain a vSPU list of a vSPU of a service processing node. The sending module 803 is configured to send the vSPU list to the GSC. The vSPU list includes first address information of the vSPU of the service processing node, and the first address information is used by the GSC to indicate a user device to select the vSPU of the service processing node for communication.

Optionally, the obtaining module 801 is further configured to obtain load of the vSPU of the service processing node; and
the processing module 802 is configured to: when the load of the vSPU of the service processing node is greater than the first preset threshold, increase a quantity of vSPUs of the service processing node.

Optionally, the obtaining module 801 is further configured to obtain the load of the vSPU of the service processing node; and
the processing module 802 is configured to: when the load of the vSPU of the service processing node is less than the second preset threshold, decrease the quantity of vSPUs of the service processing node.

Optionally, the obtaining module 801 is further configured to obtain a running status of the vSPU of the service processing node; and
the processing module 802 is further configured to update the vSPU list when the running status of the vSPU of the service processing node is abnormal.

Optionally, the receiving module 804 is configured to receive a service request sent by the user device. The service request is sent by the user device after the user device receives second address information, of a vCTRL of the service processing node, sent by the GSC. The service processing node and the terminal device belong to a same operator, or the service processing node may provide optimal service quality for the user device.

The sending module 803 is further configured to send, to the user device, the vSPU list of the service processing node or address information of a vSPU with minimum load.

It should be noted that, for implementation of each module, refer to corresponding descriptions of the method embodiment shown in FIG. 5 or FIG. 6. The module performs the method and the functions performed by the vCTRL in the foregoing embodiments.

FIG. 9 is a schematic structural diagram of another global service controller GSC according to an embodiment of this application. As shown in the figure, the GSC may include at least one processor 901, at least one communications interface 902, at least one memory 903, and at least one communications bus 904.

The processor 901 may be a central processing unit, a general-purpose processor, a digital signal processor, an application-specific integrated circuit, a field programmable gate array or another programmable logic device, a transistor logic device, a hardware component, or any combination thereof. The processor 901 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The communications bus 904 may be a peripheral component interconnect PCI bus, an extended industry standard architecture EISA bus, or the like. The bus may be classified into an address bus, a data bus, a control bus, and the like. For ease of indication, only one thick line is used to indicate the bus in FIG. 9. However, it does not indicate that there is only one bus or only one type of bus. The communications bus 904 is configured to implement connection and communication between these components. The communications interface 902 in the device in this embodiment of this application is configured to perform signaling or data communication with another node device. The memory 903 may include a volatile memory, for example, a nonvolatile dynamic random access memory (nonvolatile random access memory, NVRAM), a phase-change random access memory (phase-change RAM, PRAM), or a magnetoresistive random access memory (magnetoresistive RAM, MRAM). The memory 903 may further include a nonvolatile memory, for example, at least one magnetic disk storage device, an electrically erasable programmable read-only memory (electrically erasable programmable read-only memory, EEPROM), a flash memory device such as a NOR flash memory (NOR flash memory) or a NAND flash memory (NAND flash memory), or a semiconductor device such as a solid-state drive (solid-state disk, SSD). Optionally, the memory 903 may alternatively be at least one storage apparatus far away from the processor 901. The memory 903 stores a group of program code, and the processor 901 executes a program, stored in the memory 903, executed by the GSC.

A vSPU list sent by a vCTRL of a first service processing node in at least one service processing node is received through the communications interface 902. The vSPU list includes address information of a vSPU of the first service processing node.

The address information is sent, through the communications interface 902, to a vCTRL of a second service processing node in the at least one service processing node. The address information is used to indicate a vSPU of the second service processing node to select the vSPU of the first service processing node for communication.

Optionally, the processor 901 is further configured to:
monitor a running status of each service processing node; and
when a running status of the first service processing node is abnormal, send, through the communications interface 902, a notification message to the vCTRL of the second service processing node, where the notification message is used to indicate the vSPU of the second service processing node not to select the vSPU of the first service processing node for communication.

Optionally, the processor 901 is further configured to:
receive, through the communications interface 902, a vSPU list sent by a vCTRL of each service processing node in the at least one service processing node, where the vSPU list includes first address information of a vSPU of each service processing node;
select a target vSPU from a vSPU of the at least one service processing node; and
send, through the communications interface 902, first address information of the target vSPU to a user device, where the first address information is used to indicate the user device to communicate with the target vSPU.

Optionally, the processor 901 is further configured to:
monitor a running status of the at least one service processing node, delete a vSPU list from a service processing node whose running status is abnormal in the at least one service processing node, and select the target vSPU from a vSPU of another service processing node in the at least one service processing node.

Optionally, the processor 901 is further configured to:
receive, through the communications interface 902, load, of each vSPU of each service processing node, sent by the vCTRL of each service processing node in the at least one service processing node; and select the target vSPU from the vSPU of the at least one service processing node based on the load of each vSPU of the at least one service processing node.

Optionally, the processor 901 is further configured to:
select a vSPU with minimum load as the target vSPU from the vSPU of the at least one service processing node.

Optionally, the processor 901 is further configured to:
obtain an area location of the user device and at least one type of operator information, and select a target service processing node from the at least one service processing node based on the area location and the at least one type of operator information, where the target service processing node is a service processing node that belongs to a same operator as the user device, or a service processing node that provides optimal service quality for the user device; and
send, through the communications interface 902, second address information of a vCTRL of the target service processing node to the user device, where the second address information is used to indicate the user device to request a vSPU from the vCTRL of the target service processing node for communication.

Further, the processor may further cooperate with the memory and the communications interface to perform operations of the GSC in the foregoing embodiments of this application.

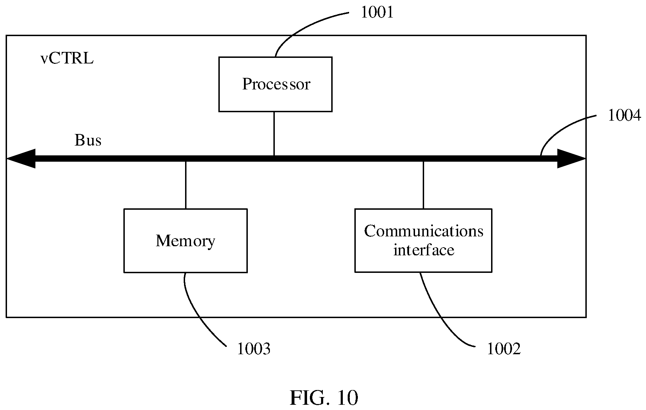

FIG. 10 is a schematic structural diagram of another node controller vCTRL according to an embodiment of this application. As shown in the figure, the vCTRL may include at least one processor 1001, at least one communications interface 1002, at least one memory 1003, and at least one communications bus 1004.

The processor 1001 may be processors of various types that are mentioned above. The communications bus 1004 may be a peripheral component interconnect PCI bus, an extended industry standard architecture EISA bus, or the like. The bus may be classified into an address bus, a data bus, a control bus, and the like. For ease of indication, only one thick line is used to indicate the bus in FIG. 10. However, it does not indicate that there is only one bus or only one type of bus. The communications bus 1004 is configured to implement connection and communication between these components. The communications interface 1002 in the device in this embodiment of this application is configured to perform signaling or data communication with another node device. The memory 1003 may be memories of various types that are mentioned above. Optionally, the memory 1003 may alternatively be at least one storage apparatus far away from the processor 1001. The memory 1003 stores a group of program code, and the processor 1001 executes a program, stored in the memory 1003, executed by a distributed unit.

A vSPU list of a first service processing node is obtained.

The vSPU list is sent to a GSC through the communications interface 1002. The vSPU list includes address information of a vSPU of the first service processing node, and the address information is used by the GSC to indicate a vSPU of a second service processing node to select the vSPU of the first service processing node for communication.

Optionally, the processor 1001 is further configured to:
obtain load of the vSPU of the first service processing node; and
when the load of the vSPU of the first service processing node is greater than a first preset threshold, increase a quantity of vSPUs of the first service processing node.

Optionally, the processor 1001 is further configured to:
obtain the load of the vSPU of the first service processing node; and
when the load of the vSPU of the first service processing node is less than a second preset threshold, decrease the quantity of vSPUs of the first service processing node.

Optionally, the processor 1001 is further configured to:
obtain a running status of the vSPU of the first service processing node; and
update the vSPU list when the running status of the vSPU of the first service processing node is abnormal.

Optionally, the processor 1001 is further configured to:
obtain a vSPU list of a vSPU of a service processing node; and
send, through the communications interface 1002, the vSPU list to the GSC, where the vSPU list includes first address information of the vSPU of the service processing node, and the first address information is used by the GSC to indicate a user device to select the vSPU of the service processing node for communication.

Optionally, the processor 1001 is further configured to:
obtain load of the vSPU of the service processing node; and
when the load of the vSPU of the service processing node is greater than the first preset threshold, increase a quantity of vSPUs of the service processing node.

Optionally, the processor 1001 is further configured to:
obtain the load of the vSPU of the service processing node; and
when the load of the vSPU of the service processing node is less than the second preset threshold, decrease the quantity of vSPUs of the service processing node.

Optionally, the processor 1001 is further configured to:
obtain a running status of the vSPU of the service processing node; and
update the vSPU list when the running status of the vSPU of the service processing node is abnormal.

Optionally, the processor 1001 is further configured to:
receive, through the communications interface 1002, a service request sent by the user device, where the service request is sent by the user device after the user device receives second address information, of a vCTRL of the service processing node, sent by the GSC, and the service processing node and the terminal device belong to a same operator, or the service processing node may provide optimal service quality for the user device; and
send, to the user device through the communications interface 1002, the vSPU list of the service processing node or address information of a vSPU with minimum load.

Further, the processor may further cooperate with the memory and the communications interface to perform operations of the vCTRL in the foregoing embodiments of this application.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center wiredly (for example, a coaxial cable, an optical fiber, or a digital subscriber line (DSL)) or wirelessly (for example, infrared, radio, and microwave). The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like.

The objectives, technical solutions, and beneficial effects of this application are further described in detail in the foregoing specific implementations. Any modification, equivalent replacement, or improvement made without departing from the principle of this application shall fall within the protection scope of this application.

## Claims

1. A communication method, wherein the method is applied to a public cloud system, the system comprises a global service controller GSC and a first service processing node, the first service processing node comprises a first node controller vCTRL and a plurality of first virtual service processing units vSPUs, and a second service processing node comprises a second vCTRL and a second vSPU; and the method comprises:
receiving, by the GSC, a first vSPU list sent by the first vCTRL, wherein the first vSPU list comprises address information of the plurality of first vSPUs; and
sending address information of a plurality of vSPUs to the second vCTRL, wherein the address information of the plurality of vSPUs is used by the second vSPU to select address information of a first target vSPU from the address information of the plurality of vSPUs, and communicating with the first target vSPU based on the address information of the first target vSPU.

2. The method according to claim 1, wherein the method further comprises:
selecting address information of a second target vSPU from the address information of the plurality of vSPUs;
and
sending the address information of the second target vSPU to a terminal device, wherein the address information of the second target vSPU is used to indicate the terminal device to communicate with the second target vSPU.

3. The method according to claim 2, wherein the selecting address information of a second target vSPU from the address information of the plurality of vSPUs comprises:
obtaining load information of each of the plurality of vSPUs; and
selecting the address information of the second target vSPU from the address information of the plurality of vSPUs based on the load information of each of the plurality of vSPUs.

4. The method according to claim 2 or 3, wherein the method further comprises:
obtaining selection information, wherein the selection information comprises an area location of the terminal device and one or more types of operator information;
selecting the first service processing node as a target service processing node based on the selection information, wherein the first service processing node is a service processing node that belongs to a same operator as the terminal device, or the first service processing node is a service processing node that can provide optimal service quality for the terminal device; and
sending address information of the first vCTRL to the terminal device, to indicate the terminal device to request the first target vSPU from the first vCTRL for communication.

5. The method according to any one of claims 1 to 4, wherein the method further comprises:
monitoring a running status of the first service processing node; and
when the running status of the first service processing node is abnormal, deleting the first vSPU list.

6. The method according to claim 5, wherein the method further comprises:
when the running status of the first service processing node is abnormal, sending a first notification message to the second vCTRL, wherein the first notification message is used to indicate the second vSPU to stop selecting the vSPU of the first service processing node for communication.

7. A communication method, wherein the method is applied to a public cloud system, the system comprises a global service controller GSC and a first service processing node, the first service processing node comprises a first node controller vCTRL and a plurality of first virtual service processing units vSPUs, and a second service processing node comprises a second vCTRL and a second vSPU; and the method comprises:
obtaining, by the first vCTRL, a first vSPU list, wherein the first vSPU list comprises address information of the plurality of first vSPUs; and
sending the first vSPU list to the GSC, wherein the first vSPU list is used by the GSC to indicate the second vSPU to select address information of a first target vSPU from address information of a plurality of vSPUs, and communicating with the first target vSPU based on the address information of the first target vSPU.

8. The method according to claim 7, wherein the method further comprises:
obtaining total load of the plurality of first vSPUs;
when the total load of the plurality of first vSPUs is greater than a first preset threshold, increasing a quantity of the first vSPUs of the first service processing node; or
when the total load of the plurality of first vSPUs is less than a second preset threshold, decreasing a quantity of the first vSPUs of the first service processing node.

9. The method according to claim 7 or 8, wherein the method further comprises:
obtaining running statuses of the plurality of first vSPUs; and
updating, by the first vCTRL, the first vSPU list when a running status of any of the plurality of first vSPUs is abnormal.

10. The method according to any one of claims 7 to 9, wherein the method further comprises:
receiving a service request sent by a terminal device, wherein the first service processing node and the terminal device belong to a same operator, or the first service processing node can provide optimal service quality for the terminal device; and
sending address information of a second target vSPU to the terminal device, wherein the second target vSPU belongs to the plurality of first vSPUs.

11. A global service controller, wherein a public cloud system comprises the global service controller GSC and a first service processing node, the first service processing node comprises a first node controller vCTRL and a plurality of first virtual service processing units vSPUs, and the second service processing node comprises a second vCTRL and a second vSPU; and the global service controller comprises a receiving module and a sending module, wherein
the receiving module is configured to receive a first vSPU list sent by the first vCTRL, wherein the first vSPU list comprises address information of the plurality of first vSPUs; and
the sending module is configured to: send address information of a plurality of vSPUs to the second vCTRL, wherein the address information of the plurality of vSPUs is used by the second vSPU to select address information of a first target vSPU from the address information of the plurality of vSPUs, and communicate with the first target vSPU based on the address information of the first target vSPU.

12. The controller according to claim 11, wherein the global service controller further comprises a processing module, wherein
the processing module is configured to select address information of a second target vSPU from the address information of the plurality of vSPUs; and
the sending module is configured to send the address information of the second target vSPU to a terminal device, wherein the address information of the second target vSPU is used to indicate the terminal device to communicate with the second target vSPU.

13. The controller according to claim 12, wherein
the processing module is configured to obtain load information of each of the plurality of vSPUs; and
the processing module is configured to select the address information of the second target vSPU from the address information of the plurality of vSPUs based on the load information of each of the plurality of vSPUs.

14. The controller according to claim 12 or 13, wherein
the processing module is configured to obtain selection information, wherein the selection information comprises an area location of the terminal device and one or more types of operator information;
the processing module is configured to select the first service processing node as a target service processing node based on the selection information, wherein the first service processing node is a service processing node that belongs to a same operator as the terminal device, or the first service processing node is a service processing node that can provide optimal service quality for the terminal device; and
the processing module is configured to send address information of the first vCTRL to the terminal device, to indicate the terminal device to request the first target vSPU from the first vCTRL for communication.

15. A service processing node, wherein a public cloud system comprises a global service controller GSC and a first service processing node, the first service processing node comprises a first node controller vCTRL and a plurality of first virtual service processing units vSPUs, and a second service processing node comprises a second vCTRL and a second vSPU; and the first service processing node comprises a processing module and a sending module, wherein
the processing module is configured to obtain a first vSPU list, wherein the first vSPU list comprises address information of the plurality of first vSPUs; and
the sending module is configured to: send the first vSPU list to the GSC, wherein the first vSPU list is used by the GSC to indicate the second vSPU to select address information of a first target vSPU from address information of a plurality of vSPUs, and communicate with the first target vSPU based on the address information of the first target vSPU.

16. The node according to claim 15, wherein
the processing module is configured to obtain total load of the plurality of first vSPUs;
the processing module is configured to: when the total load of the plurality of first vSPUs is greater than a first preset threshold, increase a quantity of the first vSPUs of the first service processing node; or
the processing module is configured to: when the total load of the plurality of first vSPUs is less than a second preset threshold, decrease a quantity of the first vSPUs of the first service processing node.

17. The node according to claims 15 and 16, wherein the first service processing node further comprises a receiving module, wherein
the receiving module is configured to receive a service request sent by a terminal device, wherein the first service processing node and the terminal device belong to a same operator, or the first service processing node can provide optimal service quality for the terminal device; and
the sending module is configured to send address information of a second target vSPU to the terminal device, wherein the second target vSPU belongs to the plurality of first vSPUs.

18. A global service controller GSC, comprising a memory, a communications bus, and a processor, wherein the memory is configured to store program code, and the processor is configured to invoke the program code to perform the method according to any one of claims 1 to 6.

19. A node controller vCTRL, comprising a memory, a communications bus, and a processor, wherein the memory is configured to store program code, and the processor is configured to invoke the program code to perform the method according to any one of claims 7 to 10.

20. A computer-readable storage medium, wherein the computer-readable storage medium stores an instruction, and when the instruction is run on a computer, the computer is enabled to perform the method according to any one of claims 1 to 10.
